# EUROPEAN PATENT APPLICATION

(11) **EP 2 109 270 A1**
(43) Date of publication of application: **14.10.2009**
(21) Application number: 08006923.0
(22) Date of filing: 07.04.2008
(51) Int. Cl.: H04L 12/58

(54) **Method and device for selecting a communication technology**

(71) Applicant: Nokia Siemens Networks Oy, 02610 Espoo (FI)
(72) Inventor: Rohnert, Hans, 81543 München (DE)
(74) Representative: Krombach, Rainer

(57) **Abstract**

A method of selecting a communication technology from among a plurality of communication technologies, for transmission of a communication, the communication originally being transmitted according to a particular protocol, comprising the steps of:
determining that the communication is one which is to be sent according to a communication technology having a protocol other than the particular protocol;
determining communication characteristics of the communication;
comparing communication characteristics against respective sets of criteria for each of the plurality of communication technologies;
selecting a candidate set of communication technologies from the plurality of communication technologies, one of which being useable to send the communication.

## Description

The present invention relates to a method of selecting a communication technology, and particularly, but not exclusively, to converting a message from one protocol type into a selected one of a plurality of protocol types.

IP Multimedia Subsystem (IMS) is a 3rd Generation Partnership Project (3GPP) standardised network architecture that provides an access network independent standardised interface for creating services, charging mechanisms and better Quality of Service (QoS) than best effort. Examples of the services that are implemented on IMS at the moment are PSTN functionality, Push-to-talk over cellular (PoC), Presence, Instant messaging and video sharing.

A Converged IP Messaging (CPM) workgroup inside the Open Mobile Alliance, OMA, aims to remove the strict divisions between traditional messaging services caused by technical differences, and provide users with a smooth, unified service experience. OMA CPM is a messaging framework which accommodates different user experiences such as deferred and immediate messaging, session-based messaging, and half-duplex or full-duplex conferencing. The objective of OMA CPM is to consolidate common functionalities of existing messaging services and new features introduced by the convergence of communications brought by session initiation protocol (SIP) based technologies. OMA CPM also interacts with other OMA enablers. Interworking with legacy messaging services like SMS and MMS means that CPM does not need to rely only on the initially limited IMS community to deliver its services. Accordingly, a CPM enabler in a CPM system can elect to send a CPM message to a non-CPM-enabled message-receiving device employed by a user, for example pre-existing devices enabled to operate according to pre-existing messaging technologies, such SMS, MMS, and email.

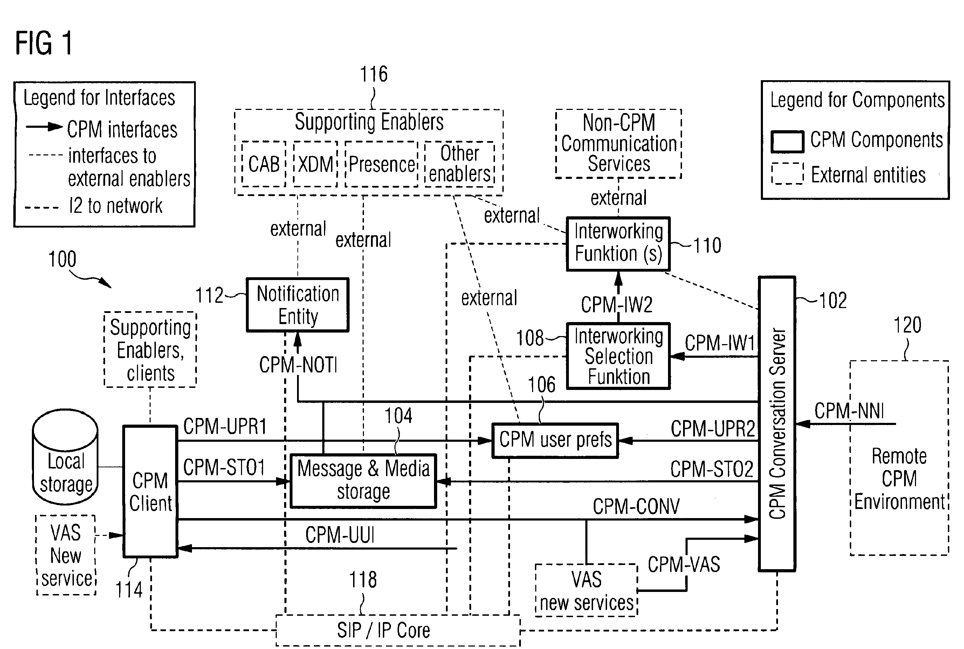

A schematic block diagram of a CPM architecture enabled to provide a CPM service is shown in Figure 1. This CPM architecture is consistent with the present form of CPM standardised within OMA. This shows a CPM enabler 100 comprising various CPM elements including a CPM conversation server 102, message & media storage 104, CPM user preferences block (including associated storage) 106, an interworking selection function (ISF) 108, a number of interworking function blocks (IWFs) 110 (one for each non-CPM communication service) although in this Figure only one is shown, a notification entity 112, and a CPM client 114. In a working CPM system there would be a number of CPM clients, each capable of sending and receiving CPM messages (and also messages according to non-CPM communication services). A non-CPM communication service is a communication service with which the CPM enabler 100 interworks (for example SMS, MMS, Instant Messaging, Push To Talk, email, VoIP, Video-over-IP).

The CPM elements interact and communicate both directly and indirectly with supporting enablers 116 (for example, Presence, XDM, DM, CAB, and CBCS), and with a SIP/IP Core 118 and a remote CPM environment 120 (for example the CPM deployment controlled by a different service provider), to provide a CPM service.

Interfaces between the elements are designated in Figure 1 by identifiers associated with arrow-headed lines between the elements, and are generally presented as "CPM-" followed by a suffix, such as CPM-IW1 between the CPM conversation server 102 and the ISF 108.

Some of the main functions of the CPM components will now be described. The CPM client 114 allows an end user to initiate and access a CPM service by interacting with the other CPM components such as the CPM conversation server 102 or the message and media storage 104. The CPM conversation server 102 acts as the main logic and control unit of the CPM enabler 100. It uses services both from other CPM components and external entities to provide the CPM service. The message and media storage 104 is the network storage for messages and media which includes both management and storage functionalities. It can be accessed both directly and indirectly by other CPM components such as the CPM client 114 and CPM conversation server 102. The CPM user preferences block 106 provides functions such as storing, modifying and retrieving of user preferences relating to the CPM services. It can be accessed by other CPM components such as the CPM client 114 and the CPM conversation server 102. The ISF 108 selects the non-CPM communication service which a CPM message or a CPM session needs to be directed to and so also selects the IWF 110 that is to perform actual interworking for the CPM message or CPM session, and the IWF 110 provides the communication with external non-CPM communication services. The ISF 108 subsequently directs the CPM message or CPM session to the selected IWF 110. The notification entity 112 provides the delivery of requested notifications.

In practice this means that if a first user (Alice) uses their CPM-enabled device to send a CPM message to a second user (Bob), and Bob has several such message-receiving devices in operation, and the devices have different capabilities, the CPM server is configured to send the message to a particular one of Bob's devices using an appropriate-messaging technology, even when the device operates using a non-CPM communication service (for example SMS, MMS, Instant Messaging, Push To Talk, email, VoIP, Video-over-IP). The CPM system may choose to send the message to a non-CPM-enabled device if, for example, Bob has recorded a preference in the CPM user preferences block 106 that messages are to be sent to device other than his CPM-enabled device. This could be the case if Bob goes on holiday and elects to leave his CPM-enabled device behind but would like messages to be sent to another of his devices.

Many different kinds of messages can be sent in a CPM system. These include various off-line communications such as email (which can contain user generated content), machine-generated messages, messages for transmitting data, session invitations (such as chat messages, discrete media, continuous media, media streams, video presentations, and requests/commands to break out to voice calls).

More information about CPM systems and their operation (and the operation of the CPM components) can be found in the following documents:
OMA Converged IP Messaging Architecture, Draft Version 1.0, 25 March 2008 (OMA-AD-CPM-V1_0-20080325-D);
OMA Converged IP Messaging Requirements, Draft Version 1.0, 31 March 2008 (OMA-RD-CPM-V1_0-20080331-D); and
OMA Converged IP Messaging System Description, Draft Version 1.0, 25 March 2008 (oMA-TS-CPM_System_Description-V1_0-20080325-D).

These documents are hereby incorporated by reference.

A CPM message is information of a discrete nature that can contain several discrete media (for example, text, images, audio-clips, video-clips). A CPM message can be sent within or outside a CPM session, where a CPM session represents a logical connection between two or more participants established for a finite duration. In a CPM session, the participants can also exchange continuous media that due to the continuous nature of this type of information requires a logical connection (that is, with a beginning and an end) to be set up and maintained between CPM participants.

According to a first aspect of the invention, there is provided a method of selecting a communication technology from among a plurality of communication technologies, for transmission of a communication, the communication originally being transmitted according to a particular protocol, comprising the steps of:
determining that the communication is one which is to be sent according to a communication technology having a protocol other than the particular protocol;
determining communication characteristics of the communication;
comparing communication characteristics against respective sets of criteria for each of the plurality of communication technologies;
selecting a candidate set of communication technologies from the plurality of communication technologies, one of which being useable to send the communication.

Preferably the communication is a message. Preferably the communication technology is a messaging technology. It should be understood that the term "message" does not necessarily mean an entity conveying user-generated content from one user to another but can refer to various other entities such as invitations and the like which are used in the setting up and facilitation of communication.

Preferably, the communication has been addressed to be sent to a particular user (referred to as a target user). It may have been addressed to an address of the user, for example a SIP address, and in one particular embodiment a CPM address.

Preferably, the plurality of communication technologies represents potential communication technologies which could be used to send the communication to a particular user. Preferably, they are non-CPM messaging technologies.

Preferably, the candidate set of communication technologies may contain one or more communication technologies. However, the candidate set of communication technologies might be empty if none of the plurality of communication technologies is considered to be suitable for sending the communication.

Preferably, once the candidate set of communication technologies has been selected, at least one communication technology from the candidate set is chosen as the communication technology to be used to send the communication. Alternatively, more than one communication technology is chosen in order that multiple forms of the communication can be sent.

Preferably, the method comprises receiving the communication. Preferably, the communication is converted from the particular protocol to a protocol other than the particular protocol in order that is may be sent according to the chosen communication technology. Preferably the communication is sent according to the other protocol.

Preferably, in a further step, once the candidate set of communication technologies has been selected, communication technologies from the candidate set are compared with the capabilities of potential devices by which a target user can receive the communication in order to choose at least one communication technology from the candidate set as the communication technology to be used to send the communication.

Preferably the criteria are a set of characteristics including at least one of communication size, communication content, user determined preference, service provider determined preferences, and limitations of the communication technologies. They may include several such characteristics. Some criteria may be rated as being more important than others, for example, service provider determined preferences may be considered more important device capabilities which may be considered more important than user preferences.

Preferably, some of the criteria are mandatory. Preferably, some of the criteria are optional. Preferably, the mandatory criteria are used to select candidate communication technologies. Should there be a plurality of communication technology candidates following application of the mandatory criteria, the optional preferences may be used to select a final choice from among the communication technology candidates.

The invention is particularly applicable in the case that a target user has several devices capable of handling different non-CPM communication technologies. A system according to the invention can choose a suitable communication technology according to characteristics of a communication and/or other factors.

Preferably the sets are logically arranged in the form of a table. This does not necessarily mean that the sets have a tabular form in whatever storage medium they are contained but that they can readily represented in such a form.

Preferably, the sets are configurable so that additional communication technologies can be added with their own respect sets of criteria (or possibly even removed). Preferable, additional criteria can be added in order that they can be added to the sets of criteria for communication technologies already included or included when additional communication technologies are added.

According to a second aspect, there is provided a communication technology selector configured to select a communication technology from among a plurality of communication technologies, for transmission of a communication, the communication originally being transmitted according to a particular protocol, the communication technology selector comprising:
a protocol determination block configured to determine that the communication is one which is to be sent according to a communication technology having a protocol other than the particular protocol;
a characteristics determination block configured to determine communication characteristics of the communication;
a comparator configured to compare communication characteristics against respective sets of criteria for each of the plurality of communication technologies;
a selector configured to select a candidate set of communication technologies from the plurality of communication technologies, one of which being useable to send the communication.

Preferably, the communication technology selector is an interworking selection function. Preferably, the communication technology selector examines communication characteristics to select an appropriate communication technology to be used to transfer the communication. In one embodiment, the communication technology selector selects a non-CPM messaging technology to deliver a CPM message. In this case the communication technology selector is a CPM interworking selection function which is capable of selecting a CPM interworking function based on the criteria, for example based on service provider policies, and/or user preferences, and/or other factors (such as message size and content).

Preferably the criteria are a set of characteristics which are logically arranged in the form of a table. The criteria, whether in the form of a table or otherwise, may be stored in a memory located in the communication technology selector. Alternatively, the criteria are stored in a memory which is located physically separate from the communication technology selector. In either case, the communication technology selector and the memory may be configured to allow modification of the criteria in the memory without interrupting the operation of the communication technology selector. The communication technology selector may download the criteria from the memory when instructed to do so for local storage in order that it has local access to a recent version of the criteria.

The invention may enable a decision making system to choose a communication technology having a plug-in facility for new communication technologies unknown at installation/configuration of the communication technology selector.

According to a third aspect, there is provided a system configured to select a communication technology from among a plurality of communication technologies, for transmission of a communication, the communication originally being transmitted according to a particular protocol, the system comprising:
a protocol determination block configured to determine that the communication is one which is to be sent according to a communication technology having a protocol other than the particular protocol;
a characteristics determination block configured to determine communication characteristics of the communication;
a comparator configured to compare communication characteristics against respective sets of criteria for each of the plurality of communication technologies;
a selector configured to select a candidate set of communication technologies from the plurality of communication technologies, one of which being useable to send the communication.

According to a fourth aspect, there is provided a plurality of sets of criteria configured to be used with the foregoing aspects of the invention for selecting a communication technology from among a plurality of communication technologies, for transmission of a communication.

According to a fifth aspect, there is provided a computer program product comprising software code that when executed on a computing system performs a method of selecting a communication technology from among a plurality of communication technologies, for transmission of a communication according to the invention.

The present invention will now be described, by example only, with reference to the accompanying drawings, in which
Figure 1 shows a schematic block diagram of a CPM architecture;
Figure 2 shows an evaluation table in accordance with an embodiment of the invention; and
Figure 3 shows greater detail of the CPM architecture of Figure 1.

An example architecture of a CPM enabler is described above with reference to Figure 1. As is known, a CPM enabler may comprise various components, entities, or functions, including a CPM conversation server, CPM clients (user agents of the users), message and media storage, a converged address book, CPM user preferences, and an interworking function and interworking selection function. The CPM enabler may also support, and communicate with, a generalised interface for Value Added Service (VAS). The CPM enabler may also cooperate with other CPM enablers. The domain represented by the CPM enabler of Figure 1 (for example within the network operated by a particular network operator) is configured to interwork with non-CPM communication services whether in this domain or not or with CPM communication services in other domains.

The present invention is not restricted to the particular architecture shown in and described in relation to Figure 1 and it may be implemented in any suitable architecture.

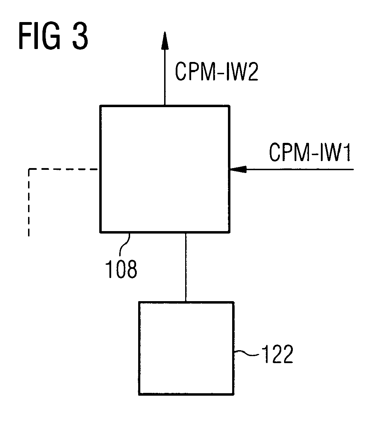

The invention is concerned with the interworking selection function (ISF) 108 in the CPM enabler 100 of Figure 1. According to the invention, the ISF 108 is provided with an evaluation table relating to various non-CPM messaging technologies which is useable in selecting a particular interworking function 110. Figure 3 shows greater detail of the CPM architecture of Figure 1. In one embodiment of the invention, the evaluation table is contained in an evaluation table memory 122 which the ISF 108 is able to access. The memory is preferably a disk memory although it can be in any suitable form, for example solid-state. It can be located separate from the ISF 108, for example physically separate or separate such that an operator is able to.modify the data held within the memory without interrupting the operation of the ISF 108. It should be noted that for each user, whether or not they are a CPM user, there would be an evaluation table. Of course, there could be fewer evaluation tables than users with an identifier for each user identifying an assigned one of the evaluation tables so that at least some of the evaluation tables are common to a number of users.

As described in the foregoing, when a first user (Alice) sends a CPM message to a second user (Bob) who has several message-receiving devices, referred to in the following as potential "target devices", there is a choice as to which device the message is sent. However, the first user does not necessarily need to know anything about the potential target devices and may simply send the message to a CPM address in the form of a SIP address.

In case that it is determined to send the message to a non-CPM-enabled message-receiving device, the CPM enabler 100 uses its interworking selection function 108 to select an appropriate interworking function 110 so that the message can be sent to a selected one of Bob's non-CPM-enabled devices using an appropriate messaging technology.

Bob's devices may have different capabilities. Some of them may be CPM-enabled, and others may not be CPM-enabled, that is non-CPM devices such as those only having SMS and MMS messaging capability. (There are other non-CPM device types such as computer devices only having email and proprietary messaging technologies, and TV devices which are capable of presenting messages by text, video, and/or audio means.)

When the CPM server 102 receives a CPM message, it checks the message. There can be a number of things which are checked, for example the message contents (in case content-filtering is to be applied), whether the message has characteristics requiring it to be received by a high or a low end CPM-enabled device, or whether the message is being sent to a non-CPM, device. The invention is particularly concerned with the handling of CPM messages which are to be transmitted over non-CPM communications technologies to non-CPM-enabled devices. When the CPM server 102 determines that is needs to transmit a CPM message over a non-CPM messaging technology to a non-CPM-enabled device, it passes the message to the interworking selection function 108 in order that the it can be sent to an appropriate messaging device using the appropriate messaging technology.

The ISF 108 receives the message and then determines message-related information. The ISF 108 then carries out a comparison between the message-related information and information from the evaluation table. To do this, the ISF 108 accesses the evaluation table memory to obtain information contained in the evaluation table. In one embodiment of the invention, each time a comparison needs to be made, the ISF 108 reads the evaluation table memory and downloads the necessary data to enable the comparison to be made. However, in another embodiment, the ISF 108 downloads the evaluation table on a first occasion and stores it in a cache memory so that it is available for transmission of messages at a later time. After this, the ISF 108 does not need to download the evaluation table again until it has received a notification that this is necessary. For example, it might be desired to change the evaluation table contained within the evaluation table memory, which can readily be done since the evaluation table memory is located separately from the ISF 108. On carrying out such a change (for example an update), a notification is sent to the ISF 108 which receives it and then accesses the evaluation table memory to transfer the latest version of it into the cache memory of the ISF 108. The notification can be sent automatically as a result of the evaluation table memory being changed or can be manually sent (for example by a human system operator).

An advantage of the invention is that it is relatively easy to extend existing configuration so as to enable interworking with additional non-CPM technologies. This is achieved by adding non-CPM messaging technologies each having their own respect sets of criteria or possibly deleting messaging technologies which are already present in the evaluation table. This is done by adding or deleting a column to or from the evaluation table. In addition, rows can be added or deleted from the evaluation table. Note that it may not be sufficient just to add a new column to the evaluation table for a new messaging technology. A new messaging technology may also necessitate the introduction of new rows to the evaluation table as it may bring new criteria that differentiate this messaging technology from others. Once, this new column and a number of new rows are created, the newly created cells are filled with appropriate values. These may be default settings. These may be inserted or modified by an administrator working from a service provider responsible for the CPM system. Finally, a selected subset of the cells of the evaluation table may be provided to the user for editing, for example for the user to can enter personal user preferences. Note that the user will not be shown the full table as some entries are irrelevant to the user, not changeable, or may even be service provider confidential.

If the evaluation table is extended to include a new messaging technology, a pointer is added to the newly added column in the evaluation table representing the newly added messaging technology, which leads to the code which can carry out the protocol translation.

This provide the advantage that if a target user changes devices (for example the target user gets new devices, replaces existing devices with other devices; this can occur as a consequence of the emergence of new messaging technologies), or if a network operator concludes an agreement with a service provider to interconnect its CPM system with a CPM system or a non-CPM system of the service provider (to interconnect to a system in another domain), the network operator's existing CPM system can be readily modified. It can even be modified without the need for the system (or at least the relevant parts of the system concerned with selecting a messaging technology) to stop operating.

Other embodiments of the evaluation table may be implemented:
1. It is not permitted to add new rows, that is, the list of criteria is fixed and cannot be extended. When a new messaging technology is introduced, the admininstrator just adds a new column and enters meaningful values into that column.
2. It is permitted to add new rows (new criteria) but each criterion can carry Boolean values only, that is, a Yes in a cell indicates that the criterion is met in order for a messaging technology to be a candidate and a No indicates the contrary.
3. It is permitted to add new rows but all criteria must be of a set of pre-defined types, for example Boolean, or Numerical, or both.

It can be seen that there is a first message check when a message is received by the CPM conversation server 102. If it turns out that the message is to be sent to a non-CPM-enabled device, it is sent to the ISF 108. In the ISF 108, there is a second message check so that the appropriate interworking function 110 can be determined. Accordingly, there is a check in both the CPM conversation server 102 and the ISF 108, which means that it is not necessary to send message related data determined in the CPM conversation server 102 to the ISF 108. This is desirable because enabling the CPM conversation server 102 and the ISF 108 to send and receive messages and in addition associated message related data could require an overly-complicated interface across which they communicate. However, in another embodiment of the invention, message related data could be sent from the CPM conversation server 102 to the ISF 108 if it is desired to reduced the number of checks carried out in each functional block, for example so that such a check only needs to be carried out in the CPM conversation server 102. In yet another embodiment of the invention, the CPM conversation server 102 and the ISF 108 are integrated into the same block. In such an arrangement, it is then not necessary for there to be an intervening interface such as the interface W1 and also only one check need to be carried out in the integrated block to determine message-related data. The message-related data can be re-used by the ISF 108 of the integrated functional block without it having to be sent across an intervening interface.

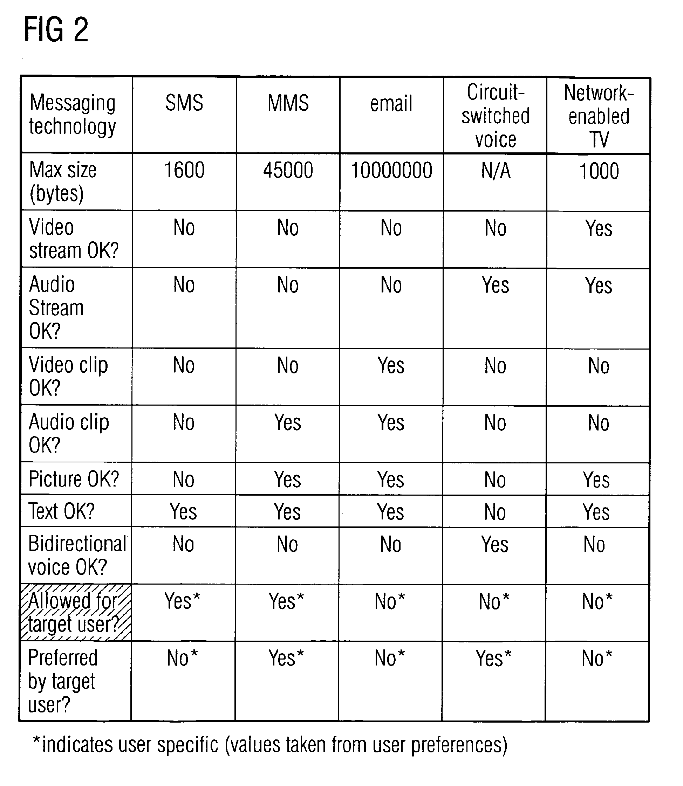

Irrespective of the form in which the invention is embodied, the ISF 108 is able to compare the message-related information with the information from the evaluation table in a comparison block. Such an evaluation table can contain categories of evaluation criteria which relate to various non-CPM messaging technologies such as the maximum message size which can be received, whether multimedia attachments are supported, whether real-time video is supported, and whether real-time audio is supported. An example evaluation table is shown in Figure 2. This table can also be considered to be a configuration table which contains the criteria steering the interworking selection process. As can be seen, it has various rows and columns. The rows contain message-related characteristics such as the maximum message size allowed for target technology, whether the target technology is able to receive video, service provider policies (such as not permitting a certain target technology for certain users), and target user preferences (like the target user preferring email). In relation to service provider policies, the service provider may prefer one technology over another and may even disallow certain technologies for certain users. In relation to user preferences, a device user may express a preference for a particular target messaging technology which is to receive messages, to receive messages during a certain time period (for example when the user is on holiday), to receive messages when the user is not online, or in any other circumstances the user might specify. The columns contain the message related characteristics applied to a particular target messaging technology, or can be considered to describe the non-CPM messaging technologies available to the CPM system via the IWFs 110, such as SMS, MMS, Instant Messaging, Push To Talk, email, VoIP, Video-over-IP, etc.

The ISF 108 checks the target messaging technologies in the table one by one (that is column by column), and for each messaging technology starting from the upper part of the table, works down through the criteria. The ISF 108 starts with SMS as the target messaging technology. The incoming message is 700 bytes long. The cell determined by the row "max message size" and the column "SMS" of the evaluation table has an entry "1600" for the criterion "max message size". An SMS message can be 160 bytes long and this scenario assumes that a maximum of 10 SMS messages can be concatenated to represent a single CPM message. So, the criterion of message size for this particular message is fulfilled by the SMS messaging technology. In the same way, the other criteria in this column are compared to the message that needs to be delivered. In this case, it can be sent that since SMS messaging technology cannot support certain media types such as video streams, audio streams, video clips, audio clips, pictures, and voice, then a message containing any such content is suitable to be sent by SMS messaging technology. If the relevant criteria are met (which in the case of SMS be that the message contains only text content), SMS is a potential candidate messaging technology for delivery of the message. If any of the criteria are not met, SMS is eliminated as a potential candidate messaging technology.

Having checked the message-related information against the first data containing column of the table, the ISF 108 compares the data entries of the other target messaging technologies (that is columns) with the message-related information of the message. After this first pass over the evaluation table, a subset of the target messaging technologies is identified, that is a list of messaging technology candidates.

If the list of messaging technology candidates is empty, the message cannot be sent and an error indication is sent back to the originator (Alice).

If the list of messaging technology candidates is not empty, the ISF 108 compares the candidates with the capabilities of the devices Bob has in operation. This information is located on a device management server which is present as a supporting enabler in the CPM system. Each messaging technology candidate is matched with the capabilities of each device: if the device is able to receive messages in a particular messaging technology, this provides a matching pair. It should be noted that some target messaging technologies require the device to be network connected whilst others do not, for example those in which a message is sent to a server for subsequent delivery. This means that certain devices can be ruled out as target devices even though they have appropriate capabilities, for example a VOIP-enable laptop without Internet connectivity at a particular time is not able to receive VoIP traffic. In carrying out this step, a presence server in the supporting enablers 116 is checked (with the ISF 108 operating as a client).

The checking discussed above is intended to lead to a single pair of a messaging technology and a target device. If it leads to more than a single pair of a messaging technology and a target device, the target user's preferences are investigated. If the target user indicated a particular messaging technology to be preferred over the others, this determines that this messaging technology is used. However, it may be the case that the user has more than one device capable of this messaging technology, or even the case that the user has multiple addresses for this messaging technology on multiple devices, for example the user has three email addresses which he can read on five devices. This can be resolved by any convenient means such as working through pre-specified user preferences which are stored in the CPM user preferences block 106 (linked to the ISF 108 although this is not shown in Figure 1).

If the possibilities discussed above to resolve the situation that there is more than a single pair of a messaging technology and a target device meeting the relevant criteria, there can be a random choice of one particular pair or it can be resolved in any suitable way.

Once a single pair of a messaging technology and a target device have been identified, the ISF 108 hands the message over to the respective protocol translator IWF 110 which translates the message into the target protocol. The translated message is then fed into the target messaging technology and it is sent to the target device where it is delivered (or delivered to a server or other storage for subsequent delivery as discussed in the foregoing).

In a particular embodiment of the invention, each cell in the evaluation table is specified as being Mandatory or Optional. (Note that different columns may have different entries being labelled Mandatory, that is what is important for one target messaging technology is less so for another. For example, message size is important for SMS but is irrelevant for streaming technologies.) In such an embodiment, the Mandatory criteria are checked in order to choose a messaging technologies. After the Mandatory criteria have been so used, if there is still more than a single pair of a messaging technology and a target device and there is no available user preference to determine a choice as discussed in the foregoing, optional criteria in the evaluation table can be used to select a message technology. Various implementations may be used. For example, the ISF 108 can employ different schemes such as comparing the number of fulfilled optional criteria against the unfulfilled ones. As an example, if alternative one fulfils 3 optional criteria and fails on 2, and alternative two fulfils 2 optional criteria and fails on 2, this would lead to alternative one being chosen. In a further embodiment, for the cells in the evaluation table, an administrator and/or the user can determine if the cell is mandatory or optional.

As an alternative to having mandatory and optional criteria, the various criteria have weights assigned to them. The messaging technology which leads to the highest score is chosen.

It should be noted that the evaluation table is relatively simple and only contains numbers and boolean values. Boolean values enable simple filtering of target non-CPM communication services.

In order to limit the space taken up by the evaluation table and/or its complexity, parts of the table which are common for all users (or groups of users) would only be stored once. User specific entries (a user preference for a certain non-CPM technology, service provider policy for a particular user or classes of users) would be stored per user or per class of users.

The CPM architecture shown in Figure 1 shows the ISF 108 as an independent logical entity. It may, however, be co-located with another logical entity of the CPM architecture, such as the CPM conversation server or the IWF, or in both, or it may be deployed as a separate physical entity.

In a yet another embodiment of the invention, the sending of a single CPM message can result in respective messages being sent to various devices. This could enable a sent message to be delivered to various devices by a number of messaging technologies, for example by SMS and email and/or to more than one device. This could be useful if a message was particularly urgent and it was desired that the chance of it being received by the user be increased. The urgency of a message could be included as another row in the evaluation table.

The invention is, however, not intended to be restricted to any examples described herein but the present invention may be applied to any system in which there is a choice of communication technologies for delivery of a communication and a comparison between a set of criteria and characteristics of the communication are used to determine which communication technology is chosen.

The techniques described herein may be implemented by various means. For example, these techniques may be implemented in hardware (one or more devices), firmware (one or more devices), software (one or more modules), or combinations thereof. For a firmware or software, implementation can be through modules (for example, procedures, functions, and so on) that perform the functions described herein. The software codes may be stored in any suitable, processor/computer-readable data storage medium(s) or memory unit(s) and executed by one or more processors/computers. The data storage medium or the memory unit may be implemented within the processor/computer or external to the processor/computer, in which case it can be communicatively coupled to the processor/computer via various means as is known in the art. Additionally, components of systems described herein may be rearranged and/or complimented by additional components in order to facilitate achieving the various aspects, goals, advantages, etc., described with regard thereto, and are not limited to the precise configurations set forth in a given figure, as will be appreciated by one skilled in the art. The user devices referred to may refer to any user communication devices having a communication capability, such as a wireless mobile terminal, a PDA, a smart phone, a personal computer (PC), a laptop computer, a desktop computer, etc. For example, such a user communications device may be an UMTS or GSM/EDGE smart mobile terminal having S60 operating system from Nokia Corporation. Thus, the application capabilities of the device according to various embodiments of the invention may include native applications available in the device as manufactured, or subsequently installed applications. The interworking selection function ISF and interworking function IWF may be implemented in any network element, such as a server.

It will be obvious to a person skilled in the art that, as the technology advances, the inventive concept can be implemented in various ways. The invention and its embodiments are not limited to the examples described above but may vary within the scope of the claims. For example, in the foregoing, messaging is discussed. However, the invention may also be applied to communication in general where different communication means need to be interworked to enable people and/or applications to communicate.

## Claims

1. A method of selecting a communication technology from among a plurality of communication technologies, for transmission of a communication, the communication originally being transmitted according to a particular protocol, comprising the steps of:
determining that the communication is one which is to be sent according to a communication technology having a protocol other than the particular protocol;
determining communication characteristics of the communication;
comparing communication characteristics against respective sets of criteria for each of the plurality of communication technologies;
selecting a candidate set of communication technologies from the plurality of communication technologies, one of which being useable to send the communication.

2. A method according to claim 1 in which the communication is a message.

3. A method according to claim 1 or claim 2 in which the plurality of communication technologies represents potential communication technologies which could be used to send the communication to a particular user.

4. A method according to any preceding claim in which the communication technologies are non-CPM messaging technologies.

5. A method according to any preceding claim in which once the candidate set of communication technologies has been selected, at least one communication technology from the candidate set is chosen as the communication technology to be used to send the communication.

6. A method according to any preceding claim in which once the candidate set of communication technologies has been selected, communication technologies from the candidate set are compared with the capabilities of potential devices by which a target user can receive the communication in order to choose at least one communication technology from the candidate set as the communication technology to be used to send the communication.

7. A method according to any preceding claim in which the criteria comprise at least one of the following characteristics: communication size, communication content, user determined preference, service provider determined preferences, and limitations of the communication technologies.

8. A method according to any preceding claim in which the user has several devices capable of handling different non-CPM communication technologies.

9. A method according to any preceding claim in which the sets are configurable so that additional communication technologies can be added with their own respect sets of criteria.

10. A method according to any claim in which the sets of configurable so that additional criteria can be added in order that they can be added to the sets of criteria for communication technologies.

11. A communication technology selector configured to select a communication technology from among a plurality of communication technologies, for transmission of a communication, the communication originally being transmitted according to a particular protocol, the communication technology selector comprising:
a protocol determination block configured to determine that the communication is one which is to be sent according to a communication technology having a protocol other than the particular protocol;
a characteristics determination block configured to determine communication characteristics of the communication;
a comparator configured to compare communication characteristics against respective sets of criteria for each of the plurality of communication technologies;
a selector configured to select a candidate set of communication technologies from the plurality of communication technologies, one of which being useable to send the communication.

12. A communication technology selector according to claim 11 which is an interworking selection function.

13. A communication technology selector according to claim 11 or claim 12 which is configured to select a non-CPM messaging technology to deliver a CPM message.

14. A communication technology selector according to any of claims 11 to 13 in which the communication technology selector and a memory containing the criteria are configurable to allow modification of the criteria in the memory without needing to interrupt the operation of the communication technology selector.

15. A communication technology selector according to claim 14 in which the memory containing the criteria is located physically separate from the communication technology selector.

16. A system configured to select a communication technology from among a plurality of communication technologies, for transmission of a communication, the communication originally being transmitted according to a particular protocol, the system comprising:
a protocol determination block configured to determine that the communication is one which is to be sent according to a communication technology having a protocol other than the particular protocol;
a characteristics determination block configured to determine communication characteristics of the communication;
a comparator configured to compare communication characteristics against respective sets of criteria for each of the plurality of communication technologies;
a selector configured to select a candidate set of communication technologies from the plurality of communication technologies, one of which being useable to send the communication.

17. A computer program product comprising software code that when executed on a computing system performs a method of selecting a communication technology from among a plurality of communication technologies, for transmission of a communication according to any of claims 1 to 10.

18. A computer program product according to claim 17 in which computer program product is stored on a computer-readable medium.
